# EUROPÄISCHE PATENTANMELDUNG

(11) **EP 1 986 332 A2**
(43) Veröffentlichungstag der Anmeldung: **29.10.2008**
(21) Anmeldenummer: 08007850.4
(22) Anmeldetag: 23.04.2008
(51) Int. Cl.: H04B 1/04, B66B 1/06, G08C 17/00

(54) **Funksystem**

(30) Priorität: 26.04.2007 DE 102007019792
(71) Anmelder: Elka Hugo Krischke GmbH, 82024 Taufkirchen (DE); Kalteis, Reinhold, 83128 Halfing (DE)
(72) Erfinder: Haimerl, Helmut, 82024 Taufkirchen b. München (DE); Kalteis, Reinhold, 83128 Halfing (DE)
(74) Vertreter: Samson & Partner

(57) **Zusammenfassung**

Funktaste für ein Funkmeldesystem, umfassend: einen Energiewandler (15) zum Umwandeln mechanischer Energie in elektrische Energie; ein Funkmodul (13) zum Senden von Funksignalen, wobei das Funkmodul von dem Energiewandler (15) mit elektrischer Energie versorgt wird; ein Betätigungselement (3); und ein Verbindungselement (7; 41), wobei das Verbindungselement (7; 41) mechanische Energie von dem Betätigungselement (3) auf den Energiewandler (15) überträgt.

## Beschreibung

### Gebiet der Erfindung

Die vorliegende Erfindung bezieht sich allgemein auf ein Funksystem und beispielsweise auf eine Funktaste für ein Funkmeldesystem, ein Funkmeldesystem und die Verwendung der Funktaste in einem Verkehrsmittel und/oder an einer Haltestelle eines Verkehrsmittels.

### Hintergrund der Erfindung

Es sind allgemein Tasten bekannt, die auf Betätigung ein Signal übertragen. Bekannte Tasten sind über eine Leitung mit einem Empfänger verbunden, der das von der Taste ausgesandte Signal empfängt und gegebenenfalls weiterverarbeitet.

Tasten finden in den verschiedensten Gebieten Verwendung, u.a. auch als "Wunsch"-Tasten bspw. in Verkehrsmitteln (wie Bus, Bahn, Verkehrsflugzeug, Schiff, u. dergleichen), im Servicebereich (bspw. Servicetaste, Notruftaste, etc.), in Aufzügen, usw., um einen Benutzer zu ermöglichen einen Wunsch, wie bspw. einen Haltewunsch, an bspw. einen Fahrer eines Verkehrsmittels zu übermitteln. Im Allgemeinen sind bekannte Tasten über eine Leitung mit einem zugehörigen Empfänger verbunden, sodass Signale von der Taste über die Leitung übertragen werden.

Neben der allgemein üblichen Verdrahtung von Wunschtasten mit entsprechenden Empfängern, wird in DE 20 2006 011 196 U1 vorgeschlagen, Haltewunsch- bzw. Serviceruftasten mit einem Energiegenerator, der auf dem Piezo-Effekt beruht, und einer Funk-Senderbaugruppe auszustatten, um drahtlos Funksignale von der Haltewunsch- bzw. Serviceruftaste an einen Empfänger zu übertragen. Weiterhin wird vorgeschlagen eine mechanisch aufgehängte Betätigungs-Wippe selbst so auszuprägen, dass sie eine mechanische Verbindung zu den beweglichen Teilen des Energiegenerators herstellt.

Aufgabe der vorliegenden Erfindung ist es, eine Funktaste und ein Funksystem, wie bspw. ein Funkmeldesystem, bereitzustellen.

### Kurzfassung der Erfindung

Nach einem ersten Aspekt stellt die vorliegende Erfindung eine Funktaste für ein Funkmeldesystem bereit, mit: einem Energiewandler zum Umwandeln mechanischer Energie in elektrische Energie; einem Funkmodul zum Senden von Funksignalen, wobei das Funkmodul von dem Energiewandler mit elektrischer Energie versorgt wird; einem Betätigungselement; und einem Verbindungselement, wobei das Verbindungselement mechanische Energie von dem Betätigungselement auf den Energiewandler überträgt.

Ein weiterer Aspekt der vorliegenden Erfindung bezieht sich auf ein Funkmeldesystem, umfassend: eine Funktaste nach dem ersten Aspekt der vorliegenden Erfindung, und einen Empfänger, wobei die Funktaste und der Empfänger in einem Verkehrsmittel angeordnet sind und der Empfänger Signale der Funktaste empfängt.

Ein weiterer Aspekt der vorliegenden Erfindung bezieht sich auf die Verwendung der Funktaste nach dem ersten Aspekt der vorliegenden Erfindung in einem Verkehrsmittel und/oder an einer Haltestelle eines Verkehrsmittels.

Weitere Aspekte und Merkmale der Erfindung ergeben sich aus den abhängigen Ansprüchen, den Zeichnungen und der nachfolgenden Beschreibung.

Neben den in den abhängigen Ansprüchen angegeben bevorzugten Ausführungsbeispielen, gibt es weitere, wie beispielsweise Ausführungsbeispiele der Funktaste, bei welcher ein Verbindungselement lösbar mit einem mechanischen Aufnahmeelement eines Energiewandlers verbunden ist.

Außerdem wird in manchen Ausführungsbeispielen bei Betätigung des Betätigungselements der Funktaste ein akustisches und/oder ein visuelles Signal erzeugt.

Ferner ist in manchen Ausführungsbeispielen ein ausgesendetes Funksignal verschlüsselt.

### Kurzbeschreibung der Zeichnungen

Ausführungsbeispiele der Erfindung werden nun beispielhaft und unter Bezugnahem auf die Zeichnungen beschrieben, in denen:
Fig. 1 eine perspektivische Außenansicht eines Ausführungsbeispiel einer Funktaste ist;
Fig. 2 eine perspektivische Innenansicht der Funktaste aus Fig. 1 zeigt;
Fig. 3 eine weitere perspektivische Innenansicht der Funktaste aus Fig. 1 zeigt;
Fig. 4 eine perspektivische Ansicht eines Verbindungselements zeigt;
Fig. 5 eine perspektivische Ansicht eines Grundträgers veranschaulicht;
Fig. 6 ein Ausführungsbeispiel eines zweiten Verbindungselements veranschaulicht.

### Beschreibung der bevorzugten Ausführungsbeispiele

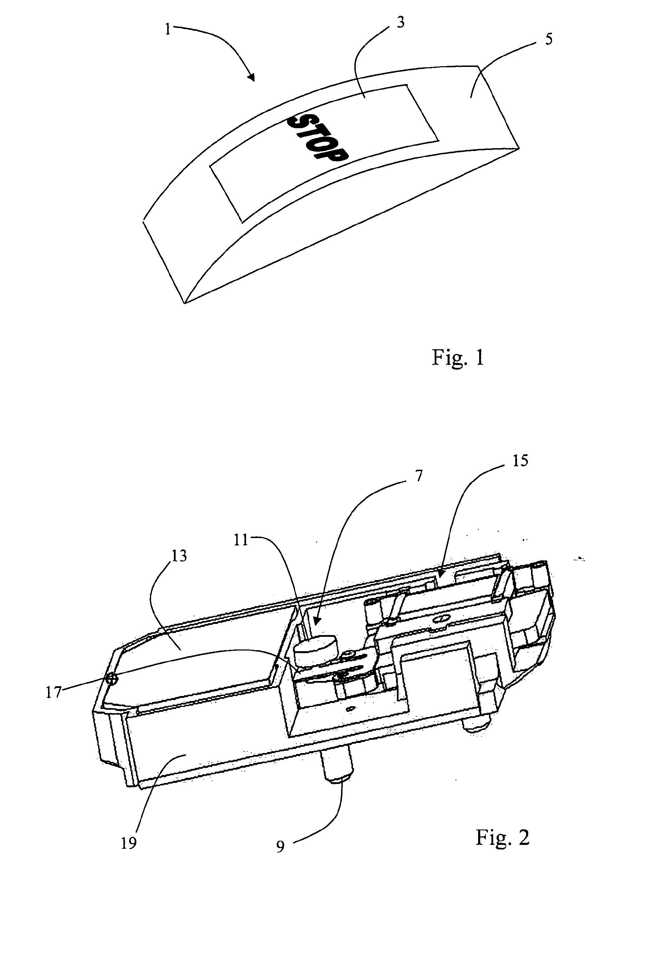

Fig. 1 veranschaulicht ein Ausführungsbeispiel einer Funktaste, hier einer Haltewunschtaste.

Vor einer detaillierten Beschreibung der Fig. 1 folgen zunächst allgemeine Erläuterungen zu den Ausführungsbeispielen und deren Vorteile.

Nach den Ausführungsbeispielen gibt es Funksysteme bzw. Funkmeldesysteme mit wenigstens einer Funktaste und einem Empfänger für die verschiedensten Einsatzgebiete, in denen ein Benutzer per Druck auf die Funktaste einen "Wunsch" in Form eines Funksignals drahtlos an einen Empfänger senden kann. Folglich sind in den Ausführungsbeispiele Funktasten unterschiedlich ausgebildet und unterscheiden sich in ihrer Funktion - je nachdem welche Art von Wunsch übermittelt werden soll. Zum Beispiel sind in den Ausführungsbeispielen Serviceruftasten, Notruftasten, Aufzugstasten, Haltewunschtasten, Ein-Ausstiegshilfetasten und dergleichen verwirklicht. Serviceruftasten dienen bspw. dazu in einem Verkehrsmittel einen Servicewunsch an entsprechendes Personal weiterzuleiten, bspw. in einem Flugzeug an das Bordpersonal, in einem Zug an das Zugpersonal, in einem Hotel an entsprechendes Hotelpersonal, im Krankenhaus an das Krankenhauspersonal, usw. Aufzugstasten dienen bspw. dazu den Aufzug anzufordern und/oder ein bestimmtes Stockwerk anzuwählen. Notruftasten dienen dazu einen Notruf entsprechend zu übertragen und sie können in verschiedene Orten eingesetzt werden: Aufzug, Verkehrsmittel, Krankenhaus, Hotelgewerbe, usw.

Haltewunschtasten sind in den Ausführungsbeispielen zum Beispiel in Verkehrsmitteln verwirklicht, die verschiedene Haltestellen erreichen. Ein Benutzer betätigt die Haltewunschtaste, um anzuzeigen, dass er an der nächsten Haltestelle das Verkehrsmittel verlassen möchte, wozu das Verkehrsmittel anhalten muss. Weiterhin sind in manchen Ausführungsbeispielen Ein-Ausstiegshilfetasten vorgesehen, die bspw. ein gehbehinderter Benutzer betätigen kann, um bspw. eine Ein-Ausstiegshilfe bei dem Verkehrsmittel aktivieren zu lassen. Z.B. kann der Führer eines Verkehrsmittels nach Betätigen der Ein-Ausstiegshilfetasten durch ein entsprechendes akustisches und/oder visuelles Signal darüber informiert werden, dass ein Fahrgast des Verkehrsmittels die Ein-Ausstiegshilfe benötigt und der Führer kann diese dann betätigen. In anderen Ausführungsbeispielen hingegen wird bspw. die Ein-Ausstiegshilfe nach Betätigung selbständig aktiviert, sobald das Verkehrsmittel angehalten hat.

In manchen Ausführungsbeispielen ist eine Haltewunschtaste und/oder Ein-Ausstiegshilfetaste auch an einer Haltestelle eines Verkehrsmittels angebracht. Hier kann ein Benutzer die Taste betätigen, um an ein herannahendes Verkehrsmittel ein entsprechendes Funksignal zu senden, dass er mitfahren will.

Wie oben schon erwähnt wurde, weist die Funktaste in manchen Ausführungsbeispielen ein Funkmodul und einen Energiewandler auf. Eine Kraft, die ein Benutzer bspw. auf ein Betätigungselement der Funktaste aufwendet, wird an den Energiewandler weiter geben, der wiederum die auf ihn übertragene Kraft in elektrische Energie umwandelt. Bei manchen Ausführungsbeispielen wandelt folglich der Energiewandler mechanische Energie in elektrische Energie um. Mechanische Energie wird bspw. dadurch weitergeben, dass eine durch einen Benutzer erzeugte Bewegung eines Betätigungselements der Funktaste auf ein mechanisches Aufnahmeelement des Energiewandlers übertragen wird. Das mechanische Aufnahmeelement des Energiewandlers übt dann - je nach Energiewandler - einen entsprechenden Druck auf einen Piezokristall auf oder der Energiewandler erzeugt einen Induktionsstrom indem zum Bsp. ein elektrischer Leiter in einem Magnetfeld bewegt wird. In manchen Ausführungsbeispielen ist es nicht möglich einen Energiewandler, der auf dem Piezo-Effekt, beruht so klein zu dimensionieren, dass er in der Funktaste zusammen mit dem Funkmodul integriert werden kann und trotzdem noch genügend Strom zur Versorgung des Funkmoduls liefert. Hingegen ist in den Ausführungsbeispielen ein Energiewandler, der einen Induktionsstrom erzeugt, entsprechend klein dimensionierbar.

Der von dem Energiewandler erzeugte elektrische Strom wird über eine Verbindung an das Funkmodul weitergeleitet, welches dann ein entsprechendes Funksignal aussendet. Das Funksignal wird von einem entsprechenden Empfänger, z.B. in einem Verkehrsbus, empfangen und ausgewertet. In den Ausführungsbeispielen sind verschiedene dem Fachmann bekannte Möglichkeiten verwirklicht, das Funksignal entsprechend (eindeutig) zu modulieren, sodass ein Empfänger das Funksignal entsprechend auswerten und zuordnen kann. In manchen Ausführungsbeispielen ist das Funksignal verschlüsselt, um eine Fehlinterpretation fremder Funksignale, die nicht von der entsprechenden Funktaste stammen, zu vermeiden.

In manchen Ausführungsbeispielen überträgt ein Verbindungselement mechanische Energie von dem Betätigungselement auf den Energiewandler. Die mechanische Energie entsteht bspw. durch eine Bewegung des Betätigungselements durch einen Benutzer. Die mechanische Energie wird wenigstens teilweise von dem Verbindungselement aufgenommen und wenigstens teilweise an den Energiewandler weitergegeben. Zur Aufnahme der mechanischen Energie, weist der Energiewandler in manchen Ausführungsbeispielen ein mechanisches Aufnahmeelement auf. Weiterhin weist das Verbindungselement in manchen Ausführungsbeispielen einen Betätigungsbereich und/oder einen Rückholbereich auf. Der Betätigungsbereich des Verbindungselements ist in manchen Ausführungsbeispielen so ausgestaltet, dass er an dem mechanischen Aufnahmeelement des Energiewandlers beim Betätigen des Betätigungselements anliegt und das mechanische Element des Energiewandlers betätigt. Der Rückholbereich ist in manchen Ausführungsbeispielen so ausgestaltet, dass er das mechanische Betätigungselement betätigt, wenn sich das Verbindungselement zusammen mit dem Betätigungselement in eine Grundstellung zurückbewegt. Die Grundstellung des Verbindungselements bzw. des Betätigungselements ist die Stellung, bei der keine äußere Kraft, bspw. durch einen Benutzer, ausgeübt wird.

In manchen Ausführungsbeispielen umfasst der Betätigungsbereich einen Betätigungszapfen und der Rückholbereich einen Rückholzapfen, die ineinander eingreifen. Zwischen dem Betätigungszapfen und dem Rückholzapfen ist ein Aufnahmebereich, der so ausgestaltet ist, dass er das mechanische Aufnahmeelement des Energiewandlers aufnehmen kann und Bewegungen des Verbindungselements bzw. des Betätigungselements sowohl beim Betätigen, als auch bei der Rückbewegung in die Grundstellung auf das Aufnahmeelement des Energiewandlers überträgt. In manchen Ausführungsbeispielen sind demnach der Betätigungsbereich und der Rückholbereich so gestaltet, dass sie keine feste Verbindung mit dem Aufnahmeelement des Energiewandlers eingehen, sondern diese lediglich kontaktieren und auf das Betätigungselement aufgebrachte Kräfte auf das Aufnahmeelement übertragen. Dadurch ist es bspw. in Ausführungsbeispielen, in denen das Betätigungselement beim Betätigen Bewegungen in alle Raumrichtungen ausführen kann, möglich, die aufgewendete mechanische Kraft auf das Aufnahmeelement des Energiewandlers zu übertragen und in eine Drehbewegung um nur eine Drehachse des Aufnahmeelements umzuwandeln.

In manchen Ausführungsbeispielen wird die von dem Energiewandler bei der Betätigung des Betätigungselements erzeugte Energie benutzt, um das Funkmodul zu betreiben. Bei manchen Ausführungsbeispielen wird lediglich die bei der Rückbewegung erzeugte Energie genutzt. Die bei der Rückbewegung erzeugte Energie weist einen im wesentlichen konstanten Betrag auf, da der Rückbewegungsablauf durch die mechanischen Teile der Funktaste gegeben ist, während der Bewegungsablauf während der Betätigung der Funktaste im wesentlichen von einem Benutzer beeinflusst wird, der die Funktaste betätigt. Bei wieder anderen wird sowohl die bei der Betätigung als auch die bei der Rückbewegung erzeugte elektrische Energie genutzt. In wieder anderen Ausführungsbeispielen wird beispielsweise die bei der Betätigung erzeugte Energie genutzt, um das Funkmodul zu versorgen und die bei der Rückbewegung erzeugte Energie wird für eine Zusatzfunktion verwendet. Solche Zusatzfunktionen sind bspw. die Versorgung einer LED, um einen Benutzer visuell anzuzeigen, dass er die Funktaste betätigt hat, die Versorgung eines akustischen Moduls um ein akustisches Signal beim Betätigen der Funktaste zu erzeugen, oder bspw. das Aufladen eines Energiespeichers, um zum Beispiel bei einem Ausfall des Energiewandlers noch eine Energiequelle zur Verfügung zu haben mit der bspw. wenigstens das Funkmodul mit Energie versorgt werden kann.

In manchen Ausführungsbeispielen, insbesondere in denen der Energiewandler einen Induktionsstrom erzeugt, kann es notwendig sein, dass das mechanischen Aufnahmeelement des Energiewandlers beim Betätigen und/oder beim Rückholen eine entsprechende Geschwindigkeit erreicht, damit die erzeugte elektrische Energie zur Versorgung, bspw. des Funkmoduls, ausreicht. Zum Beispiel ist eine entsprechende Geschwindigkeit erforderlich, um eine entsprechend große magnetische Flussänderung pro Zeiteinheit zu erreichen. Dazu ist in manchen Ausführungsbeispielen das mechanische Aufnahmeelement des Energiewandlers so ausgestaltet, dass es eine gewisse Hebelwirkung hat. Weiterhin ist manchen Ausführungsbeispielen das Verbindungselement so ausgestaltet, dass es die Hebelwirkung des mechanischen Aufnahmeelements möglichst gut ausnutzt. Dies wird in manchen Ausführungsbeispielen zum Beispiel dadurch erreicht, dass das Verbindungselement an einem äußeren Punkt des mechanischen Aufnahmeelements angreift. Je weiter außen das Verbindungselement an dem mechanischen Aufnahmeelement angreift, desto größer ist die Hebelwirkung des mechanischen Aufnahmeelements und desto höher wird die Geschwindigkeit des den Induktionsstrom erzeugenden Elements in dem Energiewandler.

In manchen Ausführungsbeispielen hält ein Halteelement den Energiewandler und/oder das Funkmodul. Das Halteelement ist weiterhin in manchen Ausführungsbeispielen so ausgestaltet, dass es das Verbindungselement wenigstens teilweise führen kann. Wie oben ausgeführt, ist in manchen Ausführungsbeispielen das Verbindungselement nicht mit dem Aufnahmeelement des Energiewandlers verbunden, sondern kontaktiert dieses lediglich. Je nach Ausführung des Betätigungselements und des Verbindungselements ist es möglich, dass ein Kontakt zwischen dem Verbindungselement und dem Aufnahmeelement des Energiewandlers verloren gehen kann. Die Führungseigenschaft des Halteelements begrenzt in manchen Ausführungsbeispielen die Beweglichkeit des Verbindungselements wenigstens derart, dass der Kontakt zwischen dem Verbindungselement und dem Aufnahmeelement des Energiewandlers nicht verloren geht. In manchen Ausführungsbeispielen gewährleistet die Führungseigenschaft auch, dass die Übertragung der mechanischen Energie von dem Betätigungselement über das Verbindungselement auf das Aufnahmeelement wenigstens so effizient ist, dass der Energiewandler genügend Energie für das Funkmodul erzeugt. Weiterhin ist das Halteelement in manchen Ausführungsbeispielen so ausgestaltet, dass das Funkmodul und der Energiewandler, bspw. durch ein Trennelement, voneinander getrennt sind. Diese Abtrennung bewirkt je nach Ausgestaltung eine Abschirmung zwischen dem Funkmodul und dem Energiewandler. Wenn der Energiewandler mechanische Energie in elektrische umwandelt, wird ein Teil der Energie in Form von elektromagnetischer Strahlung abgestrahlt. Diese elektromagentische Strahlung könnte in manchen Ausführungsbeispielen zu einer Störung der Funksignale des Funkmoduls führen. In manchen Ausführungsbeispielen wird dieser Störung auch durch eine Verschlüsselung der Funksignale entgegengewirkt. In wieder anderen sind beide Maßnahmen verwirklicht. Das Halteelement weist weiterhin in manchen Ausführungsbeispielen eine, an das Funkmodul und eine an den Energiewandler wenigstens teilweise angepasste Muldung oder Höhlung auf. Diese Höhlungen nehmen jeweils das Funkmodul bzw. den Energiewandler auf. In manchen Ausführungsbeispielen ist das Halteelement bspw. so ausgestaltet, dass es das Funkmodul und/oder den Energiewandler über eine Steckverbindung, Verklebung, Verschraubung oder ein sonstiges dem Fachmann bekanntes Mittel hält. In manchen Ausführungsbeispielen ist das Halteelement so ausgestaltet, dass es einfach mit einem Gehäuse der Funktaste verbunden werden kann. In manchen Ausführungsbeispielen sind das Funkmodul und der Energiewandler nebeneinander angeordnet, sodass der Höhenaufbau der Funktaste möglichst gering gehalten werden kann. In wieder anderen, sind das Funkmodul und der Energiewandler hingegen übereinander oder in einer sonstigen Konfiguration angeordnet.

In manchen Ausführungsbeispielen ist die Funktaste so ausgestaltet, dass sie ein akustisches Signal bei der Betätigung erzeugt. Wie oben schon erwähnt wurde, erzeugt die Funktaste in manchen Ausführungsbeispielen auch ein visuelles Signal, indem bspw. eine LED oder ein anderes Licht aussendendes Modul mit elektrischer Energie bei der Betätigung versorgt wird. In manchen Ausführungsbeispielen erzeugt die Funktaste einen entsprechenden "Druckpunkt", der dem Benutzer eine haptische Rückmeldung bei Betätigung der Funktaste gibt, sodass dieser die Betätigung spürt.

Die drahtlose Übertragung und die Versorgung durch den Energiewandler mit elektrischer Energie bei Betätigung ermöglichen es in auf eine Verkabelung der Funktaste mit einem Empfänger vollständig zu verzichten. Dadurch ist die Funktaste überall verwendbar, bspw. in Verkehrsmitteln, insbesondere des öffentlichen Nahverkehrs, und folglich auch leicht nachzurüsten.

In manchen Ausführungsbeispielen wird die Funktaste auch an einer Haltestelle verwendet. Dabei sendet die Funktaste auf Betätigung ein Funksignal aus, wie zum Beispiel ein einem Haltewunsch entsprechendes Signal, das zum Beispiel von einem Empfänger in einem herannahenden Verkehrsmittel, das in Funkreichweite des ausgesendeten Funksignals ist, empfangen wird. Daraufhin kann bspw. einem Führer des Verkehrsmittels rechtzeitig ein entsprechendes akustisches oder visuelles Signal übermittelt werden, dass ihm den Haltewunsch eines Benutzers der Funktaste an der Haltestelle anzeigt.

In manchen Ausführungsbeispielen ist ein Funksystem, bspw. ein Funkmeldesystem, mit einer Funktaste, wie oben ausgeführt, und einem Empfänger ausgestattet. Der Empfänger ist in der Lage Funksignale der Funktaste zu empfangen und entsprechend zu verarbeiten. Der Empfänger und/oder die Funktaste sind in manchen Ausführungsbeispielen in einem Verkehrsmittel angeordnet. In manchen Ausführungsbeispielen sind auch mehrere Funktasten in einem Verkehrsmittel vorhanden, deren Funksignale von dem Empfänger empfangen und entsprechend verarbeitet werden. Wie oben ausgeführt, kann die Funktaste auch außerhalb des Verkehrsmittels, bspw. an einer Haltestelle angeordnet sein.

Zurückkehrend zu Fig. 1 ist dort eine Funktaste 1 mit einem Gehäuse 5 und einem Betätigungselement 3 gezeigt. Das Betätigungselement 3 zeigt einen Schriftzug "STOP", der die Funktion der Funktaste 1 angibt. Die Funktaste 1 wird in den Ausführungsbeispielen beispielweise in einem Verkehrsmittel, zum Beispiel einem Bus, eingesetzt. Die Funktasten sind bspw. an Haltestangen nahe einer Ein-Ausstiegstüre angebracht. Betätigt ein Benutzer, z.B. ein Fahrgast, das Betätigungselement 3 der Funktaste 1, so sendet diese ein Funksignal aus, das bspw. von einem Empfänger empfangen und entsprechend weiterverarbeitet wird. Bspw. wird dem Führer des Verkehrsmittels nach Empfang des Funksignals akustisch und/oder visuell der Haltewunsch mitgeteilt. Daraufhin wird der Führer des Verkehrsmittels an der nächsten Haltestelle anhalten und bspw. die Türe, in deren Nähe sich die Funktaste befindet, für den Fahrgast öffnen.

In manchen Ausführungsbeispielen ist die Funktaste bspw. mit einem Behindertensymbol gekennzeichnet und als Ein-Ausstiegshilfetaste ausgestaltet. Die Ein-Ausstiegshilfetaste sendet bspw. ein Funksignal, das nicht nur als Haltewunsch, sondern auch noch zusätzlich als Wunsch nach einer Hilfe beim Ein- bzw. Aussteigen interpretiert wird. Diese Hilfe kann bspw. ein absenkbarer Tritt an einer Türe, ein Lift oder dergleichen sein. In manchen Ausführungsbeispielen werden solche Ein-Ausstiegshilfen automatisch beim Halt des Verkehrsmittels aktiviert, wenn ein entsprechendes Funksignal einer entsprechenden Funktaste empfangen wird.

Das Betätigungselement 3 ist hier in Form einer Wippe ausgestaltet, die sich in verschiedene Raumrichtungen bewegen kann. In anderen Ausführungsbeispielen hingegen ist die Bewegbarkeit eingeschränkt, bspw. in eine oder zwei Richtungen.

In manchen Ausführungsbeispielen ist das Betätigungselement 3 bspw. lichtdurchlässig ausgestaltet, um Licht, bspw. von einer dahinter angeordneten LED, durchzulassen. Bei Betätigung des Betätigungselements 3 leuchtet dann die LED auf und signalisiert so dem Benutzer, dass er die Funktaste wirksam betätigt hat.

In Fig. 2 ist ein Teil des Innenlebens der Funktaste 1 (mit der Unterseite nach oben) gezeigt. Ein Halteelement, hier ein Grundkörper 19, trägt ein Funkmodul 13 und einen Energiewandler 15. Das Funkmodul 13 und der Energiewandler 15 sind nebeneinander angeordnet, was einen möglichst flachen Aufbau ermöglicht.

Der Energiewandler 15 erzeugt einen Induktionsstrom, wenn ein mechanisches Aufnahmeelement 17 des Energiewandlers betätigt wird. Der Induktionsstrom fließt über eine Leitung an das Funkmodul 13, welches daraufhin ein Funksignal aussendet. Der Energiewandler ist so ausgestaltet, dass er ausreichend Energie für das Funkmodul liefert, auch wenn das mechanische Aufnahmeelement 17 nicht vollständig ausgelenkt wird. Das mechanische Aufnahmeelement 17 ist hier beispielsweise aus Metall, kann aber auch aus anderen Materialien hergestellt sein.

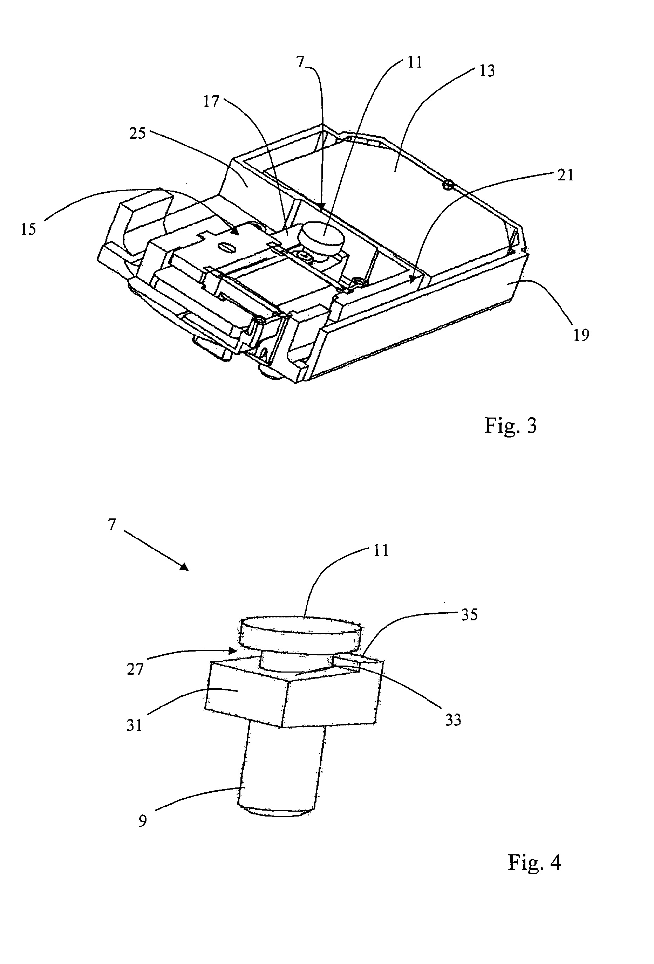

Das mechanische Aufnahmeelement 17 befindet sich in einem Aufnahmebereich 27 (vgl. Fig. 4) eines Verbindungselements 7. Das mechanischen Aufnahmeelement 17 und das Verbindungselement 7 sind nicht fest miteinander verbunden. Das Verbindungselement 7 weist einen Betätigungszapfen 9 und einen Rückholzapfen 11 auf, die ineinandergreifen und den Aufnahmebereich 27 bilden. Der Betätigungszapfen 9 ist mit dem Betätigungselement 3 verbunden. Betätigt ein Benutzer das Betätigungselement 3, so wird der Betätigungszapfen 9 entsprechend der Bewegung des Betätigungselements 3 bewegt. Drückt zum Beispiel der Betätigungszapfen 9 bei einer Bewegung von unten nach oben in Fig. 2 (dies entspricht einer Bewegung des Betätigungselements 3 in Fig. 1 in die Zeichenebene hinein), so überträgt er diese Bewegung auf das mechanische Aufnahmeelement 17. Geht das Betätigungselement 3 in seine Grundposition zurück, d.h. in die Position, die es einnimmt, wenn es nicht betätigt wird, so überträgt es diese Rückwärtsbewegung auf den Betätigungszapfen 9 und demzufolge auch auf den Rückholzapfen 11. Der Rückholzapfen 11 greift bei der Rückwärtsbewegung an dem mechanischen Aufnahmeelement 17 an und überträgt somit die Rückwärtsbewegung auf das mechanische Aufnahmeelement. Auf diese Art und Weise überträgt das Verbindungselement 7 mechanische Energie, die bspw. von einem Benutzer auf das Betätigungselement 7 übertragen wird, auf das mechanische Aufnahmeelement 7. Das lose Eingreifen des mechanischen Aufnahmeelements in den Aufnahmebereich 27 des Verbindungselements 7 und die Ausgestaltung des Aufnahmebereiches 27 ermöglichen es, dass die Bewegung des Betätigungselements 3 zuverlässig in eine Schwenkbewegung des mechanischen Aufnahmeelements 17 umgesetzt wird, bzw. dass diese entsprechend angestoßen wird um eine möglichst hohe Geschwindigkeit zu erreichen. Durch die zuverlässige Umsetzung und Übertragung der Bewegung des Betätigungselements 3 durch das Verbindungselement 7 auf das mechanische Aufnahmeelement 17 des Energiewandlers 15, kann der Energiewandler auch bei Kippbewegungen des Betätigungselements 3 genügend elektrische Energie an dem Funkmodul 13 bereitstellen.

In Fig. 3 ist eine, gegenüber der in Fig. 2 gezeigten, gedrehte Ansicht eines Innenteils der Funktaste 1 veranschaulicht. Zwischen dem Bereich des Grundträgers 19, in dem der Energiewandler 15 angeordnet ist, und dem Bereich, der das Funkmodul 13 beherbergt, verläuft ein Leitungskanal 21, in dem eine Leitung zwischen dem Energiewandler 15 und dem Funkmodul 13 verläuft. Über diese Leitung versorgt der Energiewandler 15 das Funkmodul 13 mit elektrischer Energie. Weiterhin zeigt Fig. 3 eine Trennwand 25, die das Funkmodul 13 und den Energiewandler voneinander trennt. Die Trennwand 25 absorbiert wenigstens teilweise elektromagnetische Strahlung, die der Energiewandler 15 während der Betätigung des mechanischen Aufnahmeelements 17 erzeugt. Weiterhin unterteilt die Trennwand 25 den Grundträger 19 in zwei Bereiche, die jeweils den Energiewandler 15 bzw. das Funkmodul 13 beherbergen.

Fig. 4 zeigt das Verbindungselement 7 genauer. Der Rückholzapfen 11 greift in den Betätigungszapfen 9 ein. Dazu weist der Betätigungszapfen 9 eine Bohrung auf, die im wesentlichen dem Durchmesser, des in dem Aufnahmebereich 27 gezeigten Teiles des Rückholzapfens 11 entspricht. Der Rückholzapfen 11 weist an seiner in Fig. 4 gezeigten oberen Seite einen tellerartigen Abschnitt auf. Dadurch begrenzt der Rückholzapfen 11 in Fig. 4 den Aufnahmebereich nach oben. Nach unten begrenzt eine Fläche 33 eines kastenartigen Abschnitts 31 des Betätigungszapfens 9 den Aufnahmebereich 27. Der Abstand des Aufnahmebereichs 27 zwischen den unteren Flächen des tellerartigen Abschnitts des Rückholzapfens 11 und der oberen Fläche 33 des kastenartigen Abschnitts 27 verjüngt sich von links nach rechts in Fig. 4. Die obere Fläche 33 verläuft schräg im Gegensatz zur unteren Fläche des kastenartigen Abschnitts 31. An der in Fig. 4 rechten Seite des kastenartigen Abschnitts 31 befindet sich eine angeformte Erhöhung mit einer Oberfläche 35, auf der ein Ende des mechanischen Aufnahmeelements 17 aufliegen kann (vgl. Fig. 2). Die Oberfläche 35 ist beabstandet zur schrägen Fläche 33. Durch diese Abstufung zwischen den Fläche 35 und 33 wird eine übermäßige Kraftaufwendung auf das mechanischen Aufnahmeelement 17 verhindert, wenn sich das Verbindungselement 7 in Fig. 2 entgegen dem Uhrzeigersinn dreht. Wäre bspw. die Fläche 33 eben, dann würde ein Drehung des Verbindungselements 7 das mechanischen Aufnahmeelement 17 in dem Aufnahmebereich 27 einklemmen und möglicherweise sogar verbiegen. Weiterhin soll das mechanischen Aufnahmeelement 17 im wesentlichen nur angestoßen werden, da ansonsten die Geschwindigkeit des mechanischen Aufnahmeelement zu gering ist, um genügend elektrische Energie für das Funkmodul 13 zu erzeugen. Dafür ist es auch erforderlich, dass der Hebelpunkt, der an dem mechanischen Aufnahmeelement angreift, möglichst weit außen liegt, wie es durch die Fläche 35 gegeben ist. Die in Fig. 4 rechte Fläche des kastenartigen Abschnitts 31 ist zusätzlich durch die angeformte Erhöhung gegenüber der linken Stirnfläche in Fig. 4 des kastenartigen Abschnitts 33 vergrößert. Dadurch ist eine Führung entlang eines Führungsbereiches des Grundkörpers 19 gewährleistet.

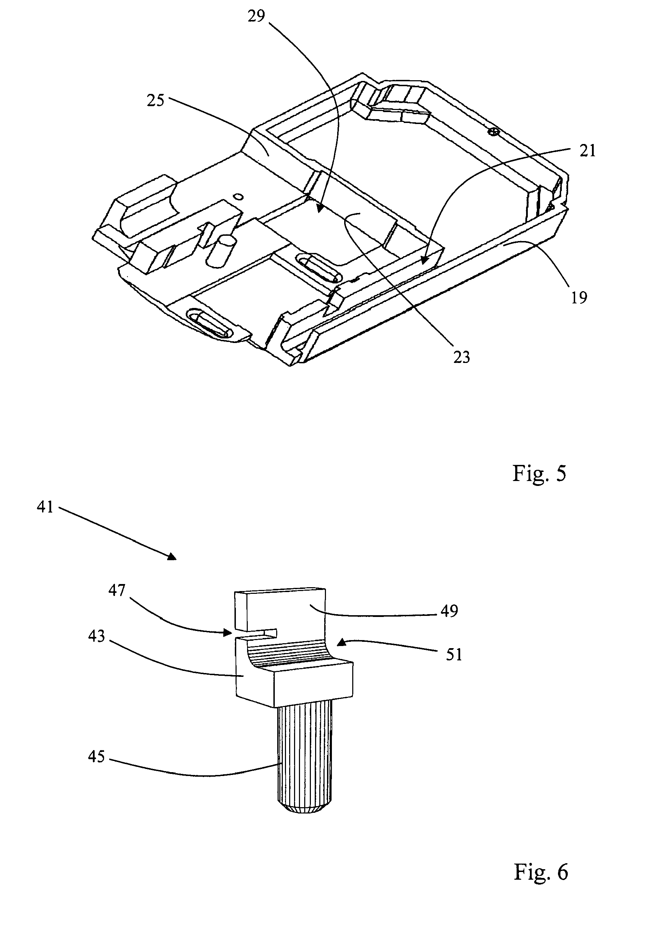

Der in Fig. 5 gezeigte Grundkörper weist in seiner Mitte einen Durchbruch 29 auf, durch den das in Fig. 5 weggelassene Verbindungselement 7 hindurchragt. An der Trennwand 25 ist einen Vertiefung, die als ein Führungsbereich 23 ausgebildet ist, angeformt. An dem Führungsbereich 23 der Trennwand 25 des Grundkörpers 19 kann die hintere Fläche des kastenartigen Abschnitts 31 des Betätigungszapfens 9 entlanggleiten. Dieser Führungsbereich 23 begrenzt die Bewegung des Verbindungselements 7, wodurch die Umsetzung der dreidimensionalen Bewegung des Betätigungselements 3 in eine Schwenkbewegung des mechanischen Aufnahmeelements 17 wenigstens teilweise ermöglicht wird. Weiterhin ist durch den Führungsbereich 23 wenigstens teilweise gewährleistet, dass der Hebelpunkt, an dem das Verbindungselement 7 an dem mechanischen Aufnahmeelement 17 angreift, im wesentlich an der gleichen Stelle, am Ende des mechanischen Aufnahmeelements liegt.

Fig. 6 zeigt ein zweites Ausführungsbeispiel eines Verbindungselements 41, mit einem Rückholbereich 43 und einem Betätigungsbereich 45, der als Betätigungszapfen ausgebildet ist. Der Rückholbereich 43 weist einen Aufnahmebereich 47 auf, der ausgebildet ist ein mechanisches Aufnahmeelement (z.B. das mechanische Aufnahmeelement 17) aufzunehmen und entsprechend zu betätigen bzw. mitzunehmen. Der Aufnahmebereich 47 hat die Form eines schlitzartigen Einschnitts, dessen Höhe höher als die Dicke eines mechanischen Aufnahmeelements ist. Das mechanische Verbindungselement 41 weist weiterhin einen flächigen Bereich 49 auf, in dem der Aufnahmebereich 47 angeordnet ist. Der flächige Bereiche 49 ist so ausgestaltet, dass er bspw. an dem in Fig. 5 gezeigten Führungsbereich 23 entlanggleiten kann und somit eine Führungsaufgabe wahrnehmen kann. Weiterhin gewährleistet die dünne Ausgestaltung des flächigen Bereiches 49 und damit auch die dünne Ausgestaltung des Aufnahmebereiches 47, dass das Verbindungselement 41 so angeordnet werden kann, dass der Aufnahmebereich 47 möglichst weit außen an einem mechanischen Aufnahmeelement angreifen kann. Wie oben ausgeführt wurde, gewährleistet das angreifen des Verbindungselements möglichst weit außen an einem mechanischen Aufnahmeelement eines Energiewandlers, d.h. an einem Punkt, an dem die Hebelwirkung groß ist, dass die die erreichbare Geschwindigkeit des mechanischen Aufnahmeelements während einer Bewegung möglichst maximal und damit auch die erzeugte elektrische Energie möglichst maximal wird. Der Rückholbereich 43 weist weiterhin eine Rundung 51 auf, durch die ein freier Bereich über ihr in dem Verbindungselement 41 geschaffen wird. Dadurch ist, wie oben für das Verbindungselement 7 ausgeführt wurde, eine Kippbewegung des Verbindungselements 41 möglich, ohne ein mechanisches Aufnahmeelement zu verbiegen oder sonstige unerwünschte Kräfte auf das mechanischen Aufnahmeelement zu übertragen.

Obige Ausführungsbeispiele und die darin enthaltenen Merkmale sind, wie für den Fachmann ersichtlich, auch in Kombination(en) und Unterkombination(en) verwirklicht.

## Patentansprüche

1. Funktaste für ein Funkmeldesystem, umfassend:
einen Energiewandler (15) zum Umwandeln mechanischer Energie in elektrische Energie,
ein Funkmodul (13) zum Senden von Funksignalen, wobei das Funkmodul von dem Energiewandler mit elektrischer Energie versorgt wird,
ein Betätigungselement (3), und
ein Verbindungselement (7; 41),
wobei das Verbindungselement (7; 41) mechanische Energie von dem Betätigungselement (3) auf den Energiewandler (15) überträgt.

2. Funktaste nach Anspruch 1, bei welcher das Verbindungselement (7; 41) einen Betätigungsbereich (9; 45) und einen Rückholbereich (11; 43) aufweist.

3. Funktaste nach Anspruch 2, bei welcher das Verbindungselement (7; 41) einen Aufnahmebereich (27) für ein mechanisches Aufnahmeelement (17) des Energiewandlers (15) aufweist.

4. Funktaste nach einem der vorhergehenden Ansprüche, bei welcher die Betätigung des mechanischen Aufnahmeelements (17) des Energiewandlers (15) einen Induktionsstrom erzeugt.

5. Funktaste nach einem der Ansprüche 2 bis 4, bei welcher der Betätigungsbereich (9; 45) eine Betätigung des Betätigungselements (3) auf den Energiewandler (15) überträgt.

6. Funktaste nach einem der Ansprüche 2 bis 5, bei welcher der Rückholbereich (11; 43) eine Rückbewegung des Betätigungselements (3) in eine Grundposition auf den Energiewandler (15) überträgt.

7. Funktaste nach einem der vorhergehenden Ansprüche, die zusätzlich ein Halteelement (19) aufweist, das den Energiewandler (15) und das Funkmodul (13) hält.

8. Funktaste nach Anspruch 7, bei welcher das Halteelement (19) wenigstens teilweise das Verbindungselement (7; 41) führt.

9. Funktaste nach Anspruch 7 oder 8, bei welcher das Halteelement (19) mit einem Gehäuse (5) der Funktaste verbunden ist.

10. Funktaste nach einem der Ansprüche 7 bis 9, bei welcher das Halteelement (19) mit dem Betätigungselement (7; 41) verbunden ist.

11. Funktaste nach einem der vorhergehenden Ansprüche, bei welcher bei Betätigung des Betätigungselements (3) ein Haltewunschsignal gesendet wird.

12. Funktaste nach einem der vorhergehenden Ansprüche, bei welcher bei Betätigung des Betätigungselements (3) ein Ein-Ausstiegsshilfesignal gesendet wird.

13. Funkmeldesystem, umfassend:
eine Funktaste (1) nach einem der Ansprüche 1 bis 12, und
einen Empfänger,
wobei die Funktaste (1) und der Empfänger in einem Verkehrsmittel angeordnet sind und der Empfänger Signale der Funktaste (1) empfängt.

14. Funkmeldesystem nach Anspruch 13, bei welchem zusätzlich eine Funktaste (1) an einer Haltestelle für das Verkehrsmittel angeordnet ist und bei Betätigung der Funktaste (1) an der Haltestelle ein Haltewunschsignal und/oder Ein-Ausstiegshilfesignal an ein Verkehrsmittel in Funkreichweite der Haltestelle gesendet wird.

15. Verwendung der Funktaste (1) nach einem der Ansprüche 1 bis 12 in einem Verkehrsmittel und/oder an einer Haltestelle eines Verkehrsmittels.
